# EUROPÄISCHE PATENTSCHRIFT

(11) **EP 3 351 735 B1**
(45) Veröffentlichungstag und Bekanntmachung des Hinweises auf die Patenterteilung: **18.10.2023**
(21) Anmeldenummer: 17152728.6
(22) Anmeldetag: 23.01.2017
(51) Int. Cl.: F01D 9/04, F01D 11/08, F01D 11/24, F01D 25/12, F01D 25/14, F01D 25/24, F01D 25/26

(54) **TURBOMASCHINENGEHÄUSEELEMENT**
TURBOMACHINE HOUSING ELEMENT
ÉLÉMENT DE CARTER DE TURBOMACHINE

(43) Veröffentlichungstag der Anmeldung: 25.07.2018
(73) Patentinhaber: MTU Aero Engines AG, 80995 München (DE)
(72) Erfinder: Albers, Lothar, 80638 München (DE)

(56) Entgegenhaltungen:
- EP-A2- 0 974 734
- US-A- 5 375 973

## Beschreibung

Die vorliegende Erfindung betrifft ein Turbomaschinengehäuseelement, eine Turbomaschine, insbesondere Gasturbine, mit dem Turbomaschinengehäuseelement sowie ein Verfahren zum Herstellen des Turbomaschinengehäuseelements und ein Verfahren zum Betreiben der Turbomaschine.

Aus der eigenen DE 10 2010 045 712 B4 oder der EP 0974734 A ist ein wenigstens teilweise mittels eines generativen Herstellungsverfahrens hergestelltes Turbomaschinengehäuse mit einem oder mehreren Steuerkanälen bekannt, in denen kühlendes oder wärmendes Fluid zur aktiven Temperierung des Turbomaschinengehäuses umgewälzt wird. Hierdurch soll insbesondere auf einen Ring zwischen Turbomaschinengehäuse und einem Laufgitter verzichtet werden. EP 713977 A und US 20160326900 A zeigen Beispiele von mehrteiligen Gehäusekomponenten, die luftgefüllte Kavitäten zur passiven Wärmedämmung aufweisen.

Eine Aufgabe einer Ausführung der vorliegenden Erfindung ist es, eine Turbomaschine, insbesondere deren Herstellung und/oder Betrieb, zu verbessern.

Diese Aufgabe wird insbesondere durch ein Turbomaschinengehäuseelement mit den Merkmalen des Anspruchs 1 gelöst. Ansprüche 10 - 12 stellen eine Turbomaschine mit einem hier beschriebenen Turbomaschinengehäuseelement bzw. ein Verfahren zu dessen Herstellung bzw. deren Betrieb unter Schutz. Vorteilhafte Ausführungsformen der Erfindung sind Gegenstand der Unteransprüche.

Nach einer Ausführung der vorliegenden Erfindung weist ein Turbomaschinengehäuseelement, insbesondere für eine Verdichter- oder Turbinenstufe einer Gasturbine, insbesondere wenigstens ein Turbomaschinengehäuseelement einer Turbomaschine, insbesondere einer Verdichter- oder Turbinenstufe einer Gasturbine, (wenigstens) einen Strömungskanal auf, in dem ein oder mehrere Laufgitter aufgenommen sind bzw. werden bzw. der hierzu vorgesehen, insbesondere eingerichtet, ist bzw. wird. Ein Laufgitter umfasst in einer Ausführung eine oder mehrere Laufschaufeln, insbesondere einen beschaufelten und drehbar( gelagerten Rotor.

Nach einer Ausführung der vorliegenden Erfindung weist das Turbomaschinengehäuseelement (wenigstens) die bzw. eine oder mehrere, in einer Ausführung höchstens sechs, der nachfolgend näher erläuterten Kavität(en) auf, wobei vorliegenden ohne Beschränkung der Allgemeinheit die bzw. eine dieser Kavität(en) als erste Kavität und gegebenenfalls die andere(n) dieser Kavitäten als weitere Kavität(en) bezeichnet werden.

Nach der vorliegenden Erfindung ist/sind bzw. wird/werden die erste und in einer Weiterbildung die bzw. eine oder mehrere der weiteren Kavität(en) bzw. deren Wandung (jeweils) vollständig oder teilweise mittels Urformens, insbesondere Gießen oder besonders bevorzugt mittels eines generativen Herstellungsverfahrens, hergestellt, und das komplette Turbomaschinengehäuseelement einstückig hergestellt. In einer Weiterbildung wird das Turbomaschinengehäuseelement schichtweise durch lokales, insbesondere chemisches und/oder physikalisches, insbesondere optisches und/oder thermisches, Verfestigen von formlosen, insbesondere flüssigem, pastösem oder losem bzw. schüttgutartigen, insbesondere pulverförmigem oder körnigem, (Ausgangs)Material, insbesondere Metall, Kunststoff und/oder Keramik, und/oder Verbinden mit einer darunterliegenden Schicht, hergestellt bzw. aufgebaut wird, insbesondere mittels selektivem Laserschmelzen, -sintern, Elektronenstrahlschmelzen oder dergleichen.

Nach einer Ausführung der vorliegenden Erfindung wird/werden bzw. ist/sind die erste und in einer Weiterbildung die bzw. eine oder mehrere der weiteren Kavität(en jeweils), insbesondere nur, zur passiven Wärmedämmung eingerichtet bzw. verwendet und/oder Fluid in keinem stationären und/oder keinem transienten Betriebszustand (der Turbomaschine) aktiv durch diese Kavität(en) umgewälzt, insbesondere (aktiv) zu- und/oder abgeführt und/oder zirkuliert, bzw. das montagefähige, insbesondere montierte und/oder betriebsbereite, Turbomaschinengehäuseelement nicht zur aktiven Umwälzung, insbesondere (aktiven) Zu- und/oder Abfuhr und/oder Zirkulation, von Fluid in, aus bzw. durch diese(r/n) Kavität(en) eingerichtet bzw. verwendet.

Dem liegt in einer Ausführung im Gegensatz zu einer aktiven Temperierung mittels aktiven Umwälzens von kühlendem oder wärmendem Fluid durch Steuerkanäle der Ansatz zugrunde, durch die - nicht aktiv durchströmte(n) -Kavität(en) eine passive Wärmedämmung zu schaffen, durch die eine Wärmeleitung in dem Turbomaschinengehäuseelement, insbesondere von dem Strömungskanal weg, insbesondere - bezogen auf eine Axialrichtung des Strömungskanals - radial bzw. senkrecht von diesem weg, reduziert und/oder verlangsamt und so insbesondere eine Wärmedehnung des Turbomaschinengehäuseelements an eine Wärmedehnung des bzw. der in seinem Strömungskanal aufgenommenen Laufgitter(s) angepasst werden kann.

Gemäß der vorliegenden Erfindung ist zwischen der ersten Kavität und dem Strömungskanal und in einer Weiterbildung zwischen (einer Anordnung) der ersten Kavität und der bzw. einer oder mehrerer der weiteren Kavität(en) einerseits und dem Strömungskanal andererseits eine ein- oder mehrteilige Dichtung, nämlich ein Einlaufbelag und/oder eine Wabendichtung, an dem Turbomaschinengehäuseelement befestigt, insbesondere form-, reib- und/oder stoffschlüssig, die von dieser bzw. diesen Kavität(en) getrennt hergestellt und von dieser bzw. diesen Kavität(en) getrennt (angeordnet) wird bzw. ist und dementsprechend vorliegend als separate Dichtung bezeichnet wird.

Dem liegt in einer Ausführung im Gegensatz zu einem Verzicht auf einen Opferring aufgrund einer aktiven Temperierung mittels aktiven Umwälzens von kühlendem oder wärmendem Fluid durch Steuerkanäle der Ansatz zugrunde, durch die Dichtung, insbesondere zusätzlich zu dieser bzw. diesen Kavität(en), eine passive Wärmedämmung zu schaffen bzw. verbessern, durch die eine Wärmeleitung in dem Turbomaschinengehäuseelement, insbesondere von dem Strömungskanal weg, insbesondere - bezogen auf eine Axialrichtung des Strömungskanals - radial bzw. senkrecht von diesem weg, reduziert und/oder verlangsamt und so insbesondere eine Wärmedehnung des Turbomaschinengehäuseelements an eine Wärmedehnung des bzw. der in seinem Strömungskanal aufgenommenen Laufgitter(s) (weiter) angepasst werden kann.

Zusätzlich oder alternativ erstreckt/erstrecken sich nach einer Ausführung der vorliegenden Erfindung die erste Kavität und in einer Weiterbildung die bzw. eine oder mehrerer der weiteren Kavität(en jeweils) in Axialrichtung des Strömungskanals über wenigstens 20%, insbesondere wenigstens 50%, insbesondere wenigstens 60%, insbesondere wenigstens 75%, einer minimalen axialen Länge des Turbomaschinengehäuseelements auf Höhe dieser (jeweiligen) Kavität und/oder einer minimalen axialen Länge der separaten Dichtung.

Dem liegt in einer Ausführung im Gegensatz zu einer aktiven Temperierung mittels aktiven Umwälzens von kühlendem oder wärmendem Fluid durch schmale Steuerkanäle, zwischen denen breite Wärmebrücken zur Aufnahme bzw. Abgabe von Wärme ausgebildet sind, der Ansatz zugrunde, eine passive Wärmedämmung zu schaffen bzw. verbessern, durch die eine Wärmeleitung in dem Turbomaschinengehäuseelement, insbesondere von dem Strömungskanal weg, insbesondere - bezogen auf eine Axialrichtung des Strömungskanals - radial bzw. senkrecht von diesem weg, reduziert und/oder verlangsamt und so insbesondere eine Wärmedehnung des Turbomaschinengehäuseelements an eine Wärmedehnung des bzw. der in seinem Strömungskanal aufgenommenen Laufgitter(s) (weiter) angepasst werden kann.

Zusätzlich oder alternativ wird/werden bzw. ist/sind nach einer Ausführung der vorliegenden Erfindung die erste Kavität und in einer Weiterbildung die bzw. eine oder mehrere der weiteren Kavität(en jeweils), insbesondere stationär, mit einem wärmedämmenden Fluid gefüllt, dessen spezifische Wärmeleitfähigkeit λ, insbesondere gemessen in [W/m·K] und/oder bei 0°C und/oder gemäß DIN 4108-4, wenigstens 10% kleiner als die spezifische Wärmeleitfähigkeit λ von Luft ist, insbesondere also wenigstens 10% kleiner als 0,026 W/m·K.

Dem liegt in einer Ausführung im Gegensatz zu einer aktiven Temperierung mittels aktiven Umwälzens von kühlendem oder wärmendem Fluid, das hierzu naturgemäß eine möglichst hohe Wärmeleitfähigkeit aufweisen soll, der Ansatz zugrunde, eine passive Wärmedämmung zu schaffen bzw. verbessern, durch die eine Wärmeleitung in dem Turbomaschinengehäuseelement, insbesondere von dem Strömungskanal weg, insbesondere - bezogen auf eine Axialrichtung des Strömungskanals - radial bzw. senkrecht von diesem weg, reduziert und/oder verlangsamt und so insbesondere eine Wärmedehnung des Turbomaschinengehäuseelements an eine Wärmedehnung des bzw. der in seinem Strömungskanal aufgenommenen Laufgitter(s) (weiter) angepasst werden kann.

Nach einer anderen Ausführung der vorliegenden Erfindung wird/werden bzw. ist/sind die erste Kavität und in einer Weiterbildung die bzw. eine oder mehrere der weiteren Kavität(en jeweils), insbesondere stationär, mit Luft gefüllt. Hierdurch kann in einer Ausführung eine besonders einfache Wärmedämmung realisiert werden.

In einer Ausführung unterscheiden sich die Volumina von der ersten und der bzw. einer der weiteren Kavität(en) und/oder die Volumina von zwei oder mehre der weiteren Kavitäten (jeweils) um wenigstens 1%, insbesondere wenigstens 2%, insbesondere wenigstens 10%, und/oder höchstens 200%, insbesondere höchstens 100%, insbesondere höchstens 50%.

Dem liegt in einer Ausführung im Gegensatz zu einer aktiven Temperierung mittels aktiven Umwälzens von kühlendem oder wärmendem Fluid durch baugleiche Steuerkanäle der Ansatz zugrunde, eine passive Wärmedämmung so anzupassen, das eine Wärmeleitung in dem Turbomaschinengehäuseelement, insbesondere von dem Strömungskanal weg, insbesondere - bezogen auf eine Axialrichtung des Strömungskanals - radial bzw. senkrecht von diesem weg, reduziert und/oder verlangsamt und so insbesondere eine Wärmedehnung des Turbomaschinengehäuseelements an eine Wärmedehnung des bzw. der in seinem Strömungskanal aufgenommenen Laufgitter(s) (weiter) angepasst werden kann.

In einer Ausführung weist das Turbomaschinengehäuseelement keinen Kanal von der ersten Kavität und/oder keinen Kanal von der bzw. einer oder mehreren der weiteren Kavität(en) zu einer Oberfläche des Turbomaschinengehäuseelements auf. Mit anderen Worten kann/können diese Kavität(en) abgeschlossen sein.

Hierdurch kann in einer Ausführung im Gegensatz zu einer Zu- und Abfuhr von kühlendem oder wärmendem Fluid in bzw. aus Steuerkanäle(n) vorteilhaft der apparative und/oder (De)Montageaufwand reduziert werden.

In einer Ausführung weist das Turbomaschinengehäuseelement nur bzw. höchstens einen Kanal von der ersten Kavität und/oder (jeweils) nur bzw. höchstens einen Kanal von der bzw. einer oder mehreren der weiteren Kavität(en) zu einer Oberfläche des Turbomaschinengehäuseelements auf. Zusätzlich oder alternativ weist in einer Ausführung jeder Kanal von der ersten Kavität und/oder von der bzw. einer oder mehreren der weiteren Kavität(en) zu einer Oberfläche des Turbomaschinengehäuseelements (jeweils) einen minimalen durchströmbaren Querschnitt, insbesondere eine Querschnittfläche in einem Schnitt senkrecht zur Kanallängsrichtung, auf, der höchstens 25%, insbesondere höchstens 10%, eines minimalen durchströmbaren Querschnitts dieser Kavität, insbesondere einer Querschnittfläche dieser Kavität in einem Meridianschnitt bzw. einem ebenen Schnitt, der die Axialrichtung des Strömungskanals und/oder eine (Haupt)Maschinenachse der Turbomaschine enthält, beträgt.

Durch solche einzelnen und/oder schmalen (Auslass)Kanäle kann in einer Ausführung vorteilhaft verbliebenes Restmaterial des generativen Herstellungsverfahrens aus dem bzw. den Kavitäten abgeführt und zugleich, insbesondere bei geringem Fertigungs- und/oder Montageaufwand, eine passive Wärmedämmung realisiert bzw. verbessert werden.

In einer Weiterbildung kann/können der Kanal bzw. einer oder mehrere der Kanäle zu einer Oberfläche des Turbomaschinengehäuseelements die erste und die weitere Kavität und/oder zwei oder mehrere der weiteren Kavitäten miteinander verbinden und/oder auf einer strömungskanalabgewandten Oberfläche des Turbomaschinengehäuseelements münden.

Durch solche gemeinsame und/oder außenmündende (Auslass)Kanäle kann in einer Ausführung verbliebenes Restmaterial des generativen Herstellungsverfahrens vorteilhaft aus dem bzw. den Kavitäten abgeführt werden.

Das Turbomaschinengehäuseelement ist einstückig bzw. -teilig hergestellt. In einer Ausfüfung wird das Turbomashcinenelement ringartig ausgebildet. Zusätzlich oder alternativ wird/werden bzw. ist/sind die erste und/oder die bzw. eine oder mehrere der weiteren Kavität(en) ringartig ausgebildet.

Hierdurch kann in einer Ausführung insbesondere eine passive Wärmedämmung verbessert werden, durch die eine Wärmeleitung, insbesondere von dem Strömungskanal weg, insbesondere - bezogen auf eine Axialrichtung des Strömungskanals - radial bzw. senkrecht von diesem weg, reduziert und/oder verlangsamt und so insbesondere eine Wärmedehnung des Turbomaschinengehäuseelements an eine Wärmedehnung des bzw. der in seinem Strömungskanal aufgenommenen Laufgitter(s) (weiter) angepasst werden kann.

Wie bereits erläutert, wird/werden bzw. ist/sind in einer Ausführung die erste Kavität und/oder die bzw. eine oder mehrere der weiteren Kavität(en) zur passiven Anpassung einer Wärmedehnung des Turbomaschinengehäuseelements an eine Wärmedehnung des Laufgitters ausgelegt, insbesondere ihre Größe, Form, Anzahl und/oder Position im Turbomaschinengehäuseelement.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1: einen Teil einer Turbomaschine mit einem Turbomaschinengehäuseelement nach einer Ausführung der vorliegenden Erfindung in einem Meridianschnitt;
- Fig. 2: einen Teil einer Turbomaschine mit einem Turbomaschinengehäuseelement nach einer weiteren Ausführung der vorliegenden Erfindung in Fig. 1 entsprechender Darstellung; und
- Fig. 3: einen Teil einer Turbomaschine mit einem Turbomaschinengehäuseelement nach einer weiteren Ausführung der vorliegenden Erfindung in Fig. 1, 2 entsprechender Darstellung.

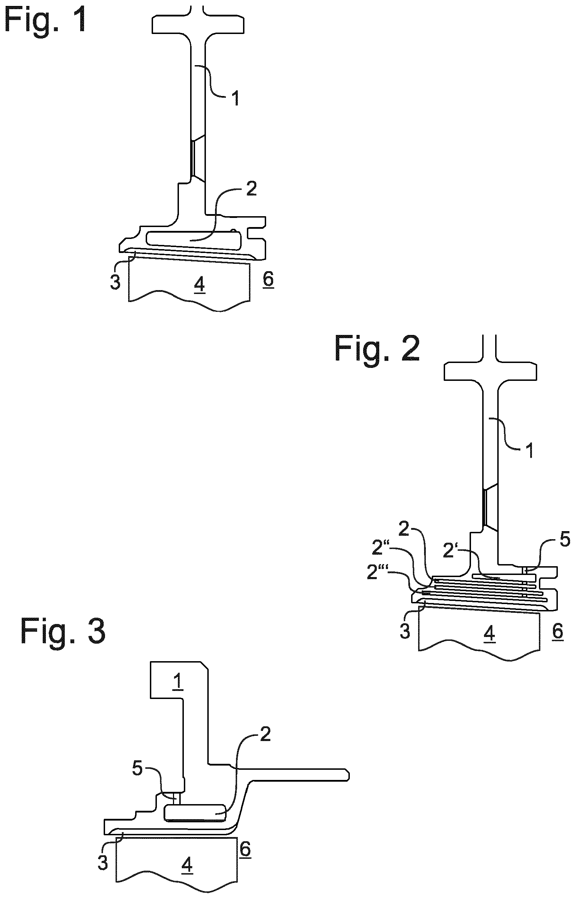

Fig. 1 zeigt einen Teil einer Turbomaschine mit einem montierten Turbomaschinengehäuseelement 1 nach einer Ausführung der vorliegenden Erfindung in einem Meridianschnitt, der eine Axialrichtung bzw. Hauptmaschinenachse der Turbomaschine (horizontal in Fig. 1) enthält.

Das ringartig ausgebildete Turbomaschinengehäuseelement 1 weist einen Strömungskanal 6 auf, in dem ein Laufgitter 4 aufgenommen ist.

Das Turbomaschinengehäuseelement 1 ist bzw. wird mittels eines generativen Herstellungsverfahrens einstückig hergestellt und weist eine dabei mit hergestellte, ringartig ausgebildete erste Kavität 2 auf.

Die erste Kavität 2 ist bzw. wird mit Luft oder einem wärmedämmenden Fluid gefüllt, dessen spezifische Wärmeleitfähigkeit λ wenigstens 10% kleiner als die spezifische Wärmeleitfähigkeit λ von Luft ist, wobei Luft bzw. wärmedämmendes Fluid in keinem stationären oder transienten Betriebszustand der Turbomaschine aktiv durch die erste Kavität 2 umgewälzt, sondern diese nur zur passiven Wärmedämmung ausgelegt bzw. eingerichtet bzw. verwendet wird bzw. ist.

Zwischen der ersten Kavität 2 und dem Strömungskanal 6 wird bzw. ist eine separate Dichtung, insbesondere ein Einlaufbelag und/oder eine Wabendichtung 3 an dem Turbomaschinengehäuseelement 1 befestigt.

Die erste Kavität 2 erstreckt sich in Axialrichtung des Strömungskanals (horizontal in Fig. 1) über etwa 85% einer minimalen axialen Länge des Turbomaschinengehäuseelements 1 auf Höhe der Kavität 2 und etwa 70% einer minimalen axialen Länge der separaten Dichtung 3.

Fig. 2 zeigt einen Teil einer Turbomaschine mit einem Turbomaschinengehäuseelement 1 nach einer weiteren Ausführung der vorliegenden Erfindung in Fig. 1 entsprechender Darstellung. Einander entsprechende Merkmale sind durch identische Bezugszeichen identifiziert, so dass auf die vorhergehende Beschreibung Bezug genommen und nachfolgend auf Unterschiede eingegangen wird.

In der Ausführung der Fig. 2 weist das Turbomaschinengehäuseelement zusätzlich zu der ersten Kavität 2, deren Größe, Form und Anordnung hieran angepasst ist bzw. wird, drei weitere Kavitäten 2', 2", 2'" auf, die mittels des generativen Herstellungsverfahrens hergestellt werden bzw. sind.

Wie die erste Kavität 2 werden bzw. sind auch diese weiteren Kavitäten 2', 2", 2‴ mit Luft oder einem wärmedämmenden Fluid gefüllt, dessen spezifische Wärmeleitfähigkeit λ wenigstens 10% kleiner als die spezifische Wärmeleitfähigkeit λ von Luft ist, wobei Luft bzw. wärmedämmendes Fluid in keinem stationären oder transienten Betriebszustand der Turbomaschine aktiv durch die weiteren Kavitäten 2', 2", 2‴ umgewälzt, sondern diese nur zur passiven Wärmedämmung ausgelegt bzw. eingerichtet bzw. verwendet werden bzw. sind.

Die weiteren Kavitäten 2', 2", 2‴ erstrecken sich in Axialrichtung des Strömungskanals 6 jeweils über einen Großteil der minimalen axialen Länge des Turbomaschinengehäuseelements 1 auf Höhe der jeweiligen Kavität und der minimalen axialen Länge der separaten Dichtung 3.

Die Volumina von wenigstens zwei der Kavitäten 2 - 2‴ unterscheiden sich um wenigstens 10% und höchstens 50%.

Die Kavitäten 2 - 2‴ kommunizieren über einen oder mehrere gemeinsame Kanäle 5 mit einer strömungskanalabgewandten Oberfläche (oben in Fig. 2) des Turbomaschinengehäuseelements 1, deren minimaler durchströmbarer Querschnitt jeweils weniger als 10% eines minimalen durchströmbaren Querschnitts der kleinsten Kavität beträgt.

Auch in der Ausführung der Fig. 1 können ein oder mehrere solche Kanäle von der ersten Kavität 2 zu einer strömungskanalabgewandten Oberfläche des Turbomaschinengehäuseelements vorgesehen sein, die im Schnitt der Fig. 1 nicht erkennbar sind.

Fig. 3 zeigt einen Teil einer Turbomaschine mit einem Turbomaschinengehäuseelement 1 nach einer weiteren Ausführung der vorliegenden Erfindung in Fig. 1, 2 entsprechender Darstellung. Einander entsprechende Merkmale sind durch identische Bezugszeichen identifiziert, so dass auf die vorhergehende Beschreibung Bezug genommen und nachfolgend auf Unterschiede eingegangen wird.

In der Ausführung der Fig. 3 weist das anders konturierte Turbomaschinengehäuseelement 1 wie in der Ausführung der Fig. 1 nur eine (erste) Kavität 2 auf, die über einen oder mehrere gemeinsamen Kanäle 5 mit einer strömungskanalabgewandten Oberfläche (oben in Fig. 3) des Turbomaschinengehäuseelements 1 kommuniziert.

Obwohl in der vorhergehenden Beschreibung exemplarische Ausführungen erläutert wurden, sei darauf hingewiesen, dass eine Vielzahl von Abwandlungen möglich ist.

So können in einer Abwandlung die erste Kavität 2 und/oder die weiteren Kavitäten 2', 2", 2‴ jeweils abgeschlossen sein bzw. werden bzw. der bzw. die Kanäle 5 entfallen, insbesondere, indem gegebenenfalls zum Entfernen von Restmaterial des generativen Herstellungsverfahrens verwendete Passagen bei montagefähigem bzw. endgefertigtem Turbomaschinengehäuseelement verschlossen sind bzw. werden. Unter einem Kanal wird entsprechend vorliegend insbesondere eine Passage verstanden, die jedenfalls im montagefähigen Zustand bzw. Betrieb des Turbomaschinengehäuseelements wenigstens temporär offen bzw. hierzu vorgesehen, insbesondere eingerichtet, ist.

Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 1: Turbomaschinengehäuseelement
- 2: erste Kavität
- 2', 2", 2‴: weitere Kavität
- 3: Einlaufbelag/Wabendichtung (Dichtung)
- 4: Laufgitter
- 5: Kanal
- 6: Strömungskanal

## Patentansprüche

1. Turbomaschinengehäuseelement (1), insbesondere für eine Verdichter- oder Turbinenstufe einer Gasturbine, mit einem Strömungskanal (6) zur Aufnahme wenigstens eines Laufgitters (4) und einer ersten Kavität (2), die wenigstens teilweise mittels Urformens, insbesondere eines generativen Herstellungsverfahrens, hergestellt ist, wobei das Turbomaschinengehäuse (1) einstückig hergestellt ist und zwischen der ersten Kavität (2) und dem Strömungskanal (6) eine separate Dichtung (3), die als Einlaufbelag oder Wabendichtung ausgebildet ist, an dem Turbomaschinengehäuseelement (1) befestigt ist,
**dadurch gekennzeichnet, dass**
die erste Kavität (2) zur passiven Wärmedämmung und das montagefähige Turbomaschinengehäuseelement (1) nicht zur aktiven Umwälzung von Fluid durch die ersten Kavität (2) eingerichtet ist und die erste Kavität (2) mit Luft oder einem wärmedämmenden Fluid gefüllt ist, dessen spezifische Wärmeleitfähigkeit λ wenigstens 10% kleiner als die spezifische Wärmeleitfähigkeit λ von Luft ist.

2. Turbomaschinengehäuseelement (1) nach dem vorhergehenden Anspruch, **dadurch gekennzeichnet, dass** es wenigstens eine weitere Kavität (2', 2", 2‴) aufweist, die wenigstens teilweise mittels des Urformens, insbesondere des generativen Herstellungsverfahrens, hergestellt ist, wobei diese weitere Kavität (2', 2", 2‴) zur passiven Wärmedämmung und/oder das montagefähige Turbomaschinengehäuseelement (1) nicht zur aktiven Umwälzung von Fluid durch diese weitere Kavität (2', 2", 2‴) eingerichtet ist und/oder die separate Dichtung (3) zwischen dieser weiteren Kavität (2', 2", 2‴) und dem Strömungskanal (6) an dem Turbomaschinengehäuseelement (1) befestigt ist und/oder diese weitere Kavität (2', 2", 2‴) sich in Axialrichtung des Strömungskanals (6) über wenigstens 20% einer minimalen axialen Länge des Turbomaschinengehäuseelements (1) auf Höhe diese weitere Kavität (2', 2", 2"') und/oder einer minimalen axialen Länge der separaten Dichtung (3) erstreckt und/oder mit Luft oder einem wärmedämmenden Fluid gefüllt ist, dessen spezifische Wärmeleitfähigkeit λ wenigstens 10% kleiner als die spezifische Wärmeleitfähigkeit λ von Luft ist.

3. Turbomaschinengehäuseelement (1) nach dem vorhergehenden Anspruch, **dadurch gekennzeichnet, dass** es höchstens fünf der weiteren Kavitäten (2', 2", 2‴) aufweist und/oder die Volumina von wenigstens zwei der Kavitäten (2, 2', 2", 2‴) sich um wenigstens 1% und/oder höchstens 200% unterscheiden.

4. Turbomaschinengehäuseelement (1) nach einem der vorhergehenden Ansprüche, **dadurch gekennzeichnet, dass** es keinen oder nur einen Kanal (5) von der ersten Kavität (2) und/oder keinen oder nur einen Kanal (5) von der wenigstens einen weiteren Kavität (2', 2", 2‴) zu einer Oberfläche des Turbomaschinengehäuseelements (1) aufweist und/oder jeder Kanal (5) von der ersten Kavität (2) und/oder von der wenigstens einen weiteren Kavität (2', 2", 2‴) zu einer Oberfläche des Turbomaschinengehäuseelements (1) einen minimalen durchströmbaren Querschnitt aufweist, der höchstens 25% eines minimalen durchströmbaren Querschnitts dieser Kavität (2, 2', 2", 2‴) beträgt.

5. Turbomaschinengehäuseelement (1) nach einem der vorhergehenden Ansprüche, **dadurch gekennzeichnet, dass** es und/oder die erste Kavität und/oder die wenigstens eine weitere Kavität ringartig ausgebildet ist-

6. Turbomaschinengehäuseelement (1) nach einem der vorhergehenden Ansprüche, **dadurch gekennzeichnet, dass** die erste Kavität (2) und/oder die wenigstens eine weitere Kavität (2', 2", 2‴) zur passiven Anpassung einer Wärmedehnung des Turbomaschinengehäuseelements (1) an eine Wärmedehnung des Laufgitters (4) ausgelegt ist.

7. Turbomaschinengehäuseelement (1) nach einem der vorhergehenden Ansprüche, **dadurch gekennzeichnet, dass** die erste Kavität (2) sich in Axialrichtung des Strömungskanals (6) über wenigstens 20% einer minimalen axialen Länge des Turbomaschinengehäuseelements (1) auf Höhe der Kavität (2) erstreckt.

8. Turbomaschinengehäuseelement (1) nach einem der vorhergehenden Ansprüche, **dadurch gekennzeichnet, dass** zwischen der ersten Kavität (2) und dem Strömungskanal (6) eine separate Dichtung (3) an dem Turbomaschinengehäuseelement (1) befestigt ist.

9. Turbomaschinengehäuseelement (1) nach Anspruch 8, **dadurch gekennzeichnet, dass** die erste Kavität (2) sich in Axialrichtung des Strömungskanals (6) über wenigstens 20% einer minimalen axialen Länge der separaten Dichtung (3) erstreckt.

10. Turbomaschine, insbesondere Gasturbine, mit wenigstens einem Turbomaschinengehäuseelement (1) nach einem der vorhergehenden Ansprüche und wenigstens einem in dessen Strömungskanal aufgenommenem Laufgitter (4), insbesondere einer Verdichter- oder Turbinenstufe der Gasturbine.

11. Verfahren zum Betreiben einer Turbomaschine, insbesondere Gasturbine, die wenigstens ein Turbomaschinengehäuseelement (1) mit einem Strömungskanal (6), in dem wenigstens ein Laufgitter (4) aufgenommen ist, und wenigstens einer Kavität (2, 2', 2", 2‴) aufweist, die wenigstens teilweise mittels eines generativen Herstellungsverfahrens hergestellt ist und nur zur passiven Wärmedämmung verwendet wird, wobei in keinem stationären und/oder keinem transienten Betriebszustand Fluid aktiv durch die Kavität (2, 2', 2", 2‴) umgewälzt wird, wobei das Turbomaschinengehäuseelement nach einem der vorhergehenden Ansprüche ausgebildet ist.

12. Verfahren zum Herstellen eines Turbomaschinengehäuseelements (1) nach einem der vorhergehenden Ansprüche, **dadurch gekennzeichnet, dass** dessen erste und/oder wenigstens eine weitere Kavität (2, 2', 2", 2‴) wenigstens teilweise mittels des generativen Herstellungsverfahrens hergestellt wird, wobei die erste und/oder wenigstens eine weitere Kavität (2, 2', 2", 2‴) zur passiven Wärmedämmung und/oder das montagefähige Turbomaschinengehäuseelement nicht zur aktiven Umwälzung von Fluid durch die erste und/oder wenigstens eine weitere Kavität (2, 2', 2", 2‴) eingerichtet wird und/oder die erste und/oder wenigstens eine weitere Kavität (2, 2', 2", 2"') mit Luft oder einem wärmedämmenden Fluid gefüllt wird, dessen spezifische Wärmeleitfähigkeit λ wenigstens 10% kleiner als die spezifische Wärmeleitfähigkeit λ von Luft ist.

## Claims

1. Turbomachine housing element (1), in particular for a compressor stage or turbine stage of a gas turbine, comprising a flow channel (6) for receiving at least one rotor cascade (4), and a first cavity (2) which is produced at least partially by means of primary shaping, in particular an additive production method, the turbomachine housing (1) being produced in one piece, and a separate seal (3) designed as an abradable lining or honeycomb seal being fastened to the turbomachine housing element (1) between the first cavity (2) and the flow channel (6),
**characterized in that**
the first cavity (2) is designed for passive thermal insulation and the assembly-ready turbomachine housing element (1) is not designed for the active circulation of fluid through the first cavity (2), and the first cavity (2) is filled with air or a thermally insulating fluid of which the specific thermal conductivity λ is at least 10% less than the specific thermal conductivity λ of air.

2. Turbomachine housing element (1) according to the preceding claim, **characterized in that** it has at least one further cavity (2', 2", 2‴) which is produced at least partially by means of the primary shaping, in particular the additive production method, this further cavity (2', 2", 2‴) being designed for passive thermal insulation and/or the assembly-ready turbomachine housing element (1) not being designed for the active circulation of fluid through this further cavity (2', 2", 2‴) and/or the separate seal (3) being fastened to the turbomachine housing element (1) between this further cavity (2', 2", 2‴) and the flow channel (6) and/or this further cavity (2', 2", 2‴) extending in the axial direction of the flow channel (6) over at least 20% of a minimum axial length of the turbomachine housing element (1) at the level of this further cavity (2', 2", 2‴) and/or a minimum axial length of the separate seal (3) and/or being filled with air or a thermally insulating fluid of which the specific thermal conductivity λ is at least 10% less than the specific thermal conductivity λ of air.

3. Turbomachine housing element (1) according to the preceding claim, **characterized in that** it has at most five of the further cavities (2', 2", 2‴) and/or the volumes of at least two of the cavities (2, 2', 2", 2‴) differ by at least 1% and/or at most 200%.

4. Turbomachine housing element (1) according to any of the preceding claims, **characterized in that** it has no or only one channel (5) from the first cavity (2) and/or no or only one channel (5) from the at least one further cavity (2', 2", 2‴) to a surface of the turbomachine housing element (1), and/or each channel (5) from the first cavity (2) and/or from the at least one further cavity (2', 2", 2‴) to a surface of the turbomachine housing element (1) has a minimum flow-traversable cross section that is at most 25% of a minimum flow-traversable cross section of this cavity (2, 2', 2", 2‴).

5. Turbomachine housing element (1) according to any of the preceding claims, **characterized in that** it and/or the first cavity and/or the at least one further cavity is annular.

6. Turbomachine housing element (1) according to any of the preceding claims, **characterized in that** the first cavity (2) and/or the at least one further cavity (2', 2", 2‴) is designed to passively adapt a thermal expansion of the turbomachine housing element (1) to a thermal expansion of the rotor cascade (4).

7. Turbomachine housing element (1) according to any of the preceding claims, **characterized in that** the first cavity (2) extends in the axial direction of the flow channel (6) over at least 20% of a minimum axial length of the turbomachine housing element (1) at the level of the cavity (2).

8. Turbomachine housing element (1) according to any of the preceding claims, **characterized in that** a separate seal (3) is fastened to the turbomachine housing element (1) between the first cavity (2) and the flow channel (6).

9. Turbomachine housing element (1) according to claim 8,
**characterized in that** the first cavity (2) extends in the axial direction of the flow channel (6) over at least 20% of a minimum axial length of the separate seal (3).

10. Turbomachine, in particular a gas turbine, comprising at least one turbomachine housing element (1) according to any of the preceding claims and at least one rotor cascade (4) accommodated in the flow channel thereof, in particular of a compressor stage or turbine stage of the gas turbine.

11. A method for operating a turbomachine, in particular a gas turbine, comprising at least one turbomachine housing element (1) having a flow channel (6) in which at least one rotor cascade (4) is received and at least one cavity (2, 2', 2", 2‴) which is produced at least partially by means of an additive production method and is used only for passive thermal insulation, wherein fluid is not actively circulated through the cavity (2, 2', 2", 2‴) in any steady-state and/or transient operating state, wherein the turbomachine housing element is designed according to any of the preceding claims.

12. Method for producing a turbomachine housing element (1) according to any of the preceding claims, **characterized in that** the first and/or at least one further cavity (2, 2', 2", 2‴) thereof is produced at least partially by means of the additive production method, the first and/or at least one further cavity (2, 2', 2", 2‴) being designed for passive thermal insulation and/or the assembly-ready turbomachine housing element not being designed for the active circulation of fluid through the first and/or at least one further cavity (2, 2', 2", 2‴) and/or the first and/or at least one further cavity (2, 2', 2", 2‴) being filled with air or a thermally insulating fluid of which the specific thermal conductivity λ is at least 10% less than the specific thermal conductivity λ of air.

## Revendications

1. Élément de carter de turbomachine (1), en particulier pour un étage de compression ou de turbine d'une turbine à gaz, comprenant un canal d'écoulement (6) pour la réception d'au moins une grille de guidage de sortie (4) et une première cavité (2), qui est fabriquée au moins partiellement au moyen d'une formation primaire, en particulier d'un procédé de fabrication génératif, le carter de turbomachine (1) étant fabriqué d'une pièce et un joint (3) séparé, qui est conçu comme un revêtement de rodage ou un joint à nid d'abeille, étant fixé à l'élément de carter de turbomachine (1) entre la première cavité (2) et le canal d'écoulement (6),
**caractérisé en ce que**
la première cavité (2) est conçue pour l'isolation thermique passive et l'élément de carter de turbomachine (1) capable d'être assemblé n'est pas conçu pour le brassage actif d'un fluide à travers la première cavité (2) et la première cavité (2) est remplie d'air ou d'un fluide thermiquement isolant, dont la conductivité thermique spécifique λ est d'au moins 10 % inférieure à la conductivité thermique spécifique λ de l'air.

2. Élément de carter de turbomachine (1) selon la revendication précédente, **caractérisé en ce qu'**il présente au moins une autre cavité (2', 2", 2‴), qui est fabriquée au moins partiellement au moyen d'une formation primaire, en particulier d'un procédé de fabrication génératif, cette autre cavité (2', 2", 2‴) étant conçue pour l'isolation thermique passive et/ou l'élément de carter de turbomachine (1) capable d'être assemblé n'étant pas conçu pour le brassage actif d'un fluide à travers cette autre cavité (2', 2", 2‴) et/ou le joint (3) séparé entre cette autre cavité (2', 2", 2‴) et le canal d'écoulement (6) étant fixé sur l'élément de carter de turbomachine (1) et/ou cette autre cavité (2', 2", 2‴) s'étendant dans la direction axiale du canal d'écoulement (6) sur au moins 20 % d'une longueur axiale minimale de l'élément de carter de turbomachine (1) à la hauteur de cette autre cavité (2', 2", 2‴) et/ou d'une longueur axiale minimale du joint (3) séparé et/ou étant remplie d'air ou d'un fluide thermiquement isolant, dont la conductivité thermique spécifique λ est d'au moins 10 % inférieure à la conductivité thermique spécifique λ de l'air.

3. Élément de carter de turbomachine (1) selon la revendication précédente, **caractérisé en ce qu'**il présente au maximum cinq des autres cavités (2', 2", 2‴) et/ou que les volumes d'au moins deux des cavités (2, 2', 2", 2‴) diffèrent d'au moins 1 % et/ou d'au maximum 200 %.

4. Élément de carter de turbomachine (1) selon l'une des revendications précédentes, **caractérisé en ce qu'**il ne présente aucun ou qu'un seul canal (5) sortant de la première cavité (2) et/ou aucun ou qu'un seul canal (5) sortant de l'au moins une autre cavité (2', 2", 2‴) vers une surface de l'élément de carter de turbomachine (1), et/ou chaque canal (5) sortant de la première cavité (2) et/ou sortant de l'au moins une autre cavité (2', 2", 2‴) vers une surface de l'élément de carter de turbomachine (1) présente une section minimale pouvant être traversée, laquelle mesure au maximum 25 % d'une section minimale pouvant être traversée de cette cavité (2, 2', 2", 2‴).

5. Élément de carter de turbomachine (1) selon l'une des revendications précédentes, **caractérisé en ce que** lui et/ou la première cavité et/ou l'au moins une autre cavité sont réalisés de forme annulaire-

6. Élément de carter de turbomachine (1) selon l'une des revendications précédentes, **caractérisé en ce que** la première cavité (2) et/ou l'au moins une autre cavité (2', 2", 2‴) sont conçues pour l'adaptation passive d'une dilatation thermique de l'élément de carter de turbomachine (1) à une dilatation thermique de la grille de guidage de sortie (4).

7. Élément de carter de turbomachine (1) selon l'une des revendications précédentes, **caractérisé en ce que** la première cavité (2) s'étend dans la direction axiale du canal d'écoulement (6) sur au moins 20 % d'une longueur axiale minimale de l'élément de carter de turbomachine (1) à la hauteur de la cavité (2).

8. Élément de carter de turbomachine (1) selon l'une des revendications précédentes, **caractérisé en ce qu'**entre la première cavité (2) et le canal d'écoulement (6), un joint (3) séparé est fixé à l'élément de carter de turbomachine (1).

9. Élément de carter de turbomachine (1) selon l'une des revendications précédentes, **caractérisé en ce que** la première cavité (2) s'étend dans la direction axiale du canal d'écoulement (6) sur au moins 20 % d'une longueur axiale minimale du joint (3) séparé.

10. Turbomachine, en particulier turbine à gaz, comprenant au moins un élément de carter de turbomachine (1) selon l'une des revendications précédentes et au moins une grille de guidage de sortie (4) reçue dans le canal d'écoulement de celui-ci, en particulier un étage de compression ou de turbine de la turbine à gaz.

11. Procédé pour faire fonctionner une turbomachine, en particulier une turbine à gaz, qui présente au moins un élément de carter de turbomachine (1) comprenant un canal d'écoulement (6), dans lequel au moins une grille de guidage de sortie (4) est reçue, et au moins une cavité (2, 2', 2", 2‴), qui est fabriquée au moins partiellement au moyen d'un procédé de fabrication génératif et qui n'est utilisé que pour l'isolation thermique passive, dans aucun état de fonctionnement stationnaire et/ou transitoire un fluide n'étant activement brassé à travers la cavité (2, 2', 2", 2‴), l'élément de carter de turbomachine étant réalisé selon l'une des revendications précédentes.

12. Procédé pour la fabrication d'un élément de carter de turbomachine (1) selon l'une des revendications précédentes, **caractérisé en ce que** sa première et/ou l'au moins une autre cavité (2, 2', 2", 2‴) est /sont fabriquée(s) au moins partiellement au moyen du procédé de fabrication génératif, la première et/ou l'au moins une autre cavité (2, 2', 2", 2‴) étant conçues pour l'isolation thermique passive et/ou l'élément de carter de turbomachine capable d'être assemblé n'étant pas conçu pour le brassage actif d'un fluide à travers la première et/ou l'au moins une autre cavité (2, 2', 2", 2‴) et/ou la première et/ou l'au moins une autre cavité (2, 2', 2", 2‴) étant remplies avec de l'air ou un fluide thermiquement isolant, dont la conductivité thermique spécifique λ est d'au moins 10 % inférieure à la conductivité thermique spécifique λ de l'air.
